# EUROPÄISCHE PATENTSCHRIFT

(11) **EP 4 366 887 B1**
(45) Veröffentlichungstag und Bekanntmachung des Hinweises auf die Patenterteilung: **03.09.2025**
(21) Anmeldenummer: 22740869.7
(22) Anmeldetag: 06.07.2022
(51) Int. Cl.: B05B 7/14, B65G 49/08, B65G 53/28

(54) **PULVERDICHTSTROMPUMPE ZUM FÖRDERN VON PULVERIGEN MATERIALIEN**
DENSE-PHASE POWDER PUMP FOR DELIVERING A POWDERY MATERIAL
POMPE À POUDRE EN PHASE DENSE POUR DÉLIVRER UNE MATIÈRE POUDREUSE

(30) Priorität: 09.07.2021 DE 102021117799
(43) Veröffentlichungstag der Anmeldung: 15.05.2024
(73) Patentinhaber: Gema Switzerland GmbH, 9200 Gossau (CH)
(72) Erfinder: SUTTER, Erich, 9015 St. Gallen (CH); SANWALD, Marco, 9030 Abtwil (CH)
(74) Vertreter: Meissner Bolte Partnerschaft mbB
(86) Internationale Anmeldenummer: PCT/EP2022/068800
(87) Internationale Veröffentlichungsnummer: WO 2023/280948

(56) Entgegenhaltungen:
- EP-A2- 1 857 384
- EP-A2- 1 895 215
- DE-A1- 102013 211 550
- DE-A1- 102017 103 487
- DE-B3- 102005 006 522

## Beschreibung

Die vorliegende Erfindung betrifft eine Pulverdichtstrompumpe nach dem Oberbegriff des unabhängigen Patentanspruchs 1.

Demgemäß betrifft die Erfindung insbesondere eine Pulverdichtstrompumpe zum Fördern von pulverigen Materialien, insbesondere Beschichtungspulver, wobei die Pulverdichtstrompumpe mindestens eine Pulverförderkammer mit einem zumindest bereichsweise in einem Mantelkörper oder Mantelrohr aufgenommenen (gasdurchlässigen) Filterelement und mindestens ein an einem Endbereich der Pulverförderkammer angeschlossenes oder anschließbares Quetschventil aufweist.

Insbesondere weist die Pulverdichtstrompumpe ein erstes an dem ansaugseitigen Endbereich der Pulverförderkammer angeschlossenes Quetschventil und ein zweites an dem förderseitigen Endbereich der Pulverförderkammer angeschlossenes Quetschventil auf. Die Pulverförderkammer weist mindestens einen Anschluss auf zum abwechselnden Anlegen eines Überdruckes und eines Unterdruckes in der Pulverförderkammer.

Eine derartige Pulverdichtstrompumpe ist dem Prinzip nach aus dem Stand der Technik bekannt. Beispielsweise beschreibt die Druckschrift EP 1 551 558 A1 eine Pulverdichtstrompumpe, welche eine erste Pulverförderkammer und eine parallel zur ersten Pulverförderkammer angeordnete zweite Pulverförderkammer aufweist.

Die Pulverförderkammern der aus diesem Stand der Technik bekannten Pumpe sind sowohl ansaugseitig als auch förderseitig jeweils durch eine mechanisch betätigte Quetschventilanordnung begrenzt.

Im Einzelnen ist dabei vorgesehen, dass im ansaugseitigen bzw. förderseitigen Bereich der Pulverpumpe die mit den jeweiligen Pulverförderkammern verbundenen Pulverschläuche mit einem mechanisch betätigten Stempel deformierbar sind, um bei Bedarf den Schlauchabschnitt abzuquetschen bzw. zu öffnen. Die Pulverförderkammern der aus diesem Stand der Technik bekannten Pumpe weisen ein gasdurchlässiges Filterelement auf. Über einen Vakuumanschluss wird in der Pulverförderkammer ein Unterdruck erzeugt, infolgedessen über den ansaugseitigen Endbereich der Pulverförderkammer Beschichtungspulver in die Pulverförderkammer eingesaugt wird. Anschließend wird das am ansaugseitigen Endbereich der Pulverförderkammer vorgesehene Quetschventil geschlossen und das am förderseitigen Endbereich der Pulverförderkammer vorgesehene Quetschventil geöffnet. Durch das Anliegen eines Überdruckes in der Pulverförderkammer wird das zuvor in die Pulverförderkammer eingesaugte Beschichtungspulver wieder aus der Pulverförderkammer über den förderseitigen Endbereich ausgestoßen.

Diese aus dem Stand der Technik bekannte Pulverpumpe weist im praktischen Gebrauch verschiedene Nachteile auf. Insbesondere ist es mit der in diesem Stand der Technik vorgeschlagenen Konstruktion nur mit relativ hohem Aufwand möglich, ein ggf. verstopftes Filterelement oder ein defektes Quetschventil auszutauschen. Insbesondere erlaubt es die aus diesem Stand der Technik bekannte Lösung nicht, ein Filterelement auszutauschen, ohne dass in den Aufbau der Quetschventile eingegriffen wird. Somit besteht die Gefahr, dass nach einer Wartung bzw. dem Austausch des Filterelements Leckagen auftreten, und die sichere Funktionsweise der Pulverpumpe nicht mehr gewährleistet ist.

Auch andere aus dem Stand der Technik bekannte Pulverdichtstrompumpen der zuvor genannten Art, wie zum Beispiel aus dem Dokument DE 10 2017 103487 A1 bekannt, weisen den Nachteil auf, dass diese nur mit relativ hohem Aufwand gewartet werden können. Insbesondere ist das Austauschen der Quetschventile der bekannten Pulverdichtstrompumpen relativ aufwendig.

Auf Grundlage dieser Probleme liegt somit der vorliegenden Erfindung die Aufgabe zu Grunde, eine Pulverdichtstrompumpe der eingangs genannten Art dahingehend weiterzubilden, dass diese mit relativ geringem Aufwand gewartet werden kann, wobei insbesondere ein Quetschventil der Pulverdichtstrompumpe und/oder ein gasdurchlässiges Filterelement der Pulverförderkammer der Pulverdichtstrompumpe ohne die Gefahr einer Beeinträchtigung der Funktionsweise der Pulverdichtstrompumpe in einer leicht zu realisierenden Weise ausgetauscht werden können/kann.

Die der Erfindung zu Grunde liegende Aufgabe wird durch den Gegenstand des unabhängigen Patentanspruchs 1 gelöst, wobei vorteilhafte Weiterbildungen der erfindungsgemäßen Pulverdichtstrompumpe in den jeweiligen abhängigen Patentansprüchen angegeben sind.

Demgemäß betrifft die Erfindung eine Pulverdichtstrompumpe, welche eine Pulverförderkammer mit einem vorzugsweise zylinderförmigen und insbesondere kreiszylinderförmigen Mantelrohr bzw. Mantelkörper und einem im Inneren des Mantelrohrs bzw. Mantelkörpers angeordneten gasdurchlässigen Filterelement aufweist. Die Pulverdichtstrompumpe weist mindestens ein an einem Endbereich der Pulverförderkammer angeschlossenes oder anschließbares Quetschventil auf.

Vorzugsweise weist die Pulverdichtstrompumpe ein erstes an dem ansaugseitigen Endbereich der Pulverförderkammer angeschlossenes Quetschventil und ein weiteres, zweites an dem förderseitigen Endbereich der Pulverförderkammer angeschlossenes Quetschventil auf. Die Pulverförderkammer weist mindestens einen Anschluss auf zum abwechselnden Anlegen eines Überdrucks und eines Unterdrucks in der Pulverförderkammer.

Erfindungsgemäß ist vorgesehen, dass die Pulverdichtstrompumpe ein insbesondere als Endstück der Pulverförderkammer ausgebildetes Quetschventilgehäuse aufweist, welches einen der Pulverförderkammer zugewandten ersten Bereich und einen gegenüberliegenden zweiten Bereich aufweist. Der erste Bereich des Quetschventilgehäuses ist ausgebildet, mittels einer Steckverbindung und vorzugsweise nur mittels einer reinen Steckverbindung mit dem Endbereich der Pulverförderkammer verbindbar zu sein. Der zweite Bereich des Quetschventilgehäuses ist ausgebildet, das Quetschventil austauschbar aufzunehmen.

Die mit der erfindungsgemäßen Lösung erzielbaren Vorteile liegen auf der Hand: durch das Vorsehen des Quetschventilgehäuses, welches nicht nur das Quetschventil aufnimmt, sondern auch den Übergang zwischen der Pulverförderkammer und dem Quetschventil bildet, ist es möglich, das Quetschventil auf den entsprechenden Endbereich der Pulverkammer zu stecken, so dass sich die Pulverförderkammer - beispielsweise zum Zwecke der Wartung - durch einfaches Lösen dieser Steckverbindung von den entsprechenden Quetschventilen trennen lässt.

Dadurch ist es beispielsweise bei einem Austausch des in dem Mantelkörper der Pulverförderkammer angeordneten gasdurchlässigen Filterelements in einfacher Weise möglich, die Steckverbindung zwischen dem Quetschventilgehäuse und der Pulverförderkammer zu lösen. Anschließend ist die Pulverförderkammer mit dem in dem Mantelkörper aufgenommenen Filterelement von dem ansaugseitigen und förderseitigen Quetschventil getrennt.

Ebenso lässt sich das Quetschventil in einfacher Weise von dem Endbereich der Pulverförderkammer entfernen, da dieses in einem eigenen Bereich (zweiten Bereich) des Quetschventilgehäuses aufgenommen ist.

Erfindungsgemäß ist vorgesehen, dass bei dem Endbereich der Pulverkammer sich das Filterelement über den Endbereich des Mantelkörpers hinaus erstreckt, und wobei der erste Bereich des Quetschventilgehäuses ausgebildet ist, den sich über den Endbereich des Mantelkörpers hinaus erstreckenden Bereich des Filterelements aufzunehmen.

Zum Ausbilden der Steckverbindung zwischen dem Quetschventilgehäuse und der Pulverförderkammer ist gemäß Ausführungsformen der erfindungsgemäßen Pulverdichtstrompumpe vorgesehen, dass der erste Bereich des Quetschventilgehäuses einen dem Mantelkörper zugewandten ersten Abschnitt und einen gegenüberliegenden zweiten Abschnitt aufweist, wobei der erste Abschnitt des Quetschventilgehäuses und der Endbereich des Mantelkörpers der Pulverförderkammer ausgebildet sind, eine lösbare Steckverbindung zwischen dem Quetschventilgehäuse und dem Mantelkörper auszubilden.

Gemäß Ausführungsformen der zuletzt genannten Ausgestaltung der erfindungsgemäßen Pulverdichtstrompumpe ist vorgesehen, dass der erste Abschnitt des Quetschventilgehäuses als Spitzende für den Anschluss an den Endbereich des Mantelkörpers ausgebildet ist.

Alternativ hierzu ist es aber auch denkbar und bevorzugt, dass der Endbereich des Mantelkörpers als Spitzende für den Anschluss an den ersten Abschnitt des Quetschventilgehäuses ausgebildet ist.

Auf diese Weise sind unterschiedliche Typen von Steckverbindungen realisierbar, insbesondere eine Gleitringverbindung, eine Lippendichtung, eine Kompressionsdichtung oder eine Kompressions-Lippendichtung.

In vorteilhafter Weise ist mindestens ein Anschlag vorgesehen, welcher ausgebildet ist, eine Bewegung des Quetschventilgehäuses relativ zu dem Mantelkörper der Pulverförderkammer in Steckrichtung zu begrenzen. Auf diese Weise ist eine definierte Steckverbindung zwischen dem Quetschventilgehäuse und der Pulverförderkammer realisierbar.

In diesem Zusammenhang ist es denkbar, dass der mindestens eine Anschlag durch eine am Endbereich des Mantelkörpers ausgebildete erste Anschlagfläche und eine am ersten Bereich des Quetschventilgehäuses ausgebildete zweite Anschlagfläche gebildet wird. Nach dem Ausbilden der Steckverbindung zwischen dem Quetschventilgehäuse und dem Endbereich der Pulverförderkammer sollte die zweite Anschlagfläche an der ersten Anschlagfläche vorzugsweise abdichtend anliegen.

Um beim Ausbilden der Steckverbindung zwischen dem Quetschventilgehäuse und der Pulverförderkammer eine Dichtwirkung durch Zusammenstecken der beiden Komponenten zu erzielen, ist insbesondere vorgesehen, dass zwischen dem ersten Abschnitt des Quetschventilgehäuses und dem Endbereich des Mantelkörpers ein elastisches Dichtmittel, vorzugsweise in Gestalt eines O-Rings, vorgesehen ist.

Gemäß bevorzugten Realisierungen der erfindungsgemäßen Pulverdichtstrompumpe ist vorgesehen, dass der zweite Abschnitt des Quetschventilgehäuses ausgebildet ist, einen sich über den Endbereich des Mantelkörpers hinaus erstreckenden Bereich des Filterelements aufzunehmen. Hierbei sollte zwischen dem zweiten Abschnitt des Quetschventilgehäuses und dem sich über den Endbereich des Mantelkörpers hinaus erstreckenden Bereich des Filterelements ein elastisches Dichtmittel, vorzugsweise in Gestalt eines O-Rings, vorgesehen sein.

Gemäß Ausführungsformen der erfindungsgemäßen Pulverdichtstrompumpe ist ein lösbares Sicherungselement, insbesondere in Gestalt einer Klammer, vorgesehen, um das Quetschventilgehäuse mit der eingesteckten Pulverförderkammer an einer Halterung der Pulverdichtstrompumpe lösbar zu fixieren, und um so die Steckverbindung zwischen dem Quetschventilgehäuse und dem Mantelkörper der Pulverförderkammer lösbar zu fixieren. Selbstverständlich kommen hier aber auch andere Lösungen für das Sicherungselement in Frage.

Gemäß bevorzugten Realisierungen der erfindungsgemäßen Pulverdichtstrompumpe ist das Quetschventil als patronen- oder kartuschenartige Komponente ausgeführt und weist ein zumindest bereichsweise schlauchförmiges Ventilelement auf, dessen Umfangswand quer zur Ventilelement-Längsachse zusammenquetschbar ist, um den Durchflussquerschnitt zu verändern. Vorzugsweise weist das Quetschventil zusätzlich eine insbesondere zumindest im Wesentlichen rohrförmige Stützstruktur auf, in welcher das Ventilelement zumindest bereichsweise insbesondere austauschbar aufgenommen ist.

Beispielsweise kann die Stützstruktur aus mehreren in der Umfangsrichtung der Umfangswand herum aneinander gereihten, jeweils einen bogenförmigen Querschnitt aufweisenden Schalenelementen bestehen, die in bezüglich der Ventilelement-Längsachse radialer Richtung außen an das Ventilelement angesetzt sind.

Durch das Vorsehen einer solchen Stützstruktur ist sichergestellt, dass das Ventilelement des Quetschventils ohne Beeinträchtigung seiner Abstützung einfach installierbar ist. Beim Zusammenbau des Quetschventils ergibt sich eine kartuschen- oder patronenartige Baueinheit, in Folge dessen sich ein aufwendiges Einstecken des Ventilelements in eine Stützstruktur erübrigt. Stattdessen können die einzelnen Schalenelemente der Stützstruktur von radial außen her an das schlauchförmige Ventilelement angesetzt werden, um somit die in ihrer Umfangsrichtung segmentierte Stützstruktur zu bilden. Die aus den Schalenelementen und dem Ventilelement zusammengesetzte kartuschen- oder patronenartige Baueinheit kann axial in den zweiten Bereich des Ventilgehäuses eingeführt und bei Bedarf auch wieder entnommen werden.

Insbesondere ist das Quetschventil in den zweiten Bereich des Quetschventilgehäuses einsteckbar, wobei im eingesteckten Zustand zwischen dem Quetschventil und einem Innenwandbereich des zweiten Bereichs des Quetschventilgehäuses eine mit Druckluft beaufschlagbare, insbesondere ringförmige Druckkammer gebildet wird.

In diesem Zusammenhang bietet es sich an, dass das Quetschventilgehäuse mindestens einen Druckluftanschluss aufweist, über den der Druckkammer bedarfsweise Druckluft zuführbar ist.

Um eine Bewegung des Quetschventils relativ zu dem Quetschventilgehäuse bzw. relativ zu dem zweiten Bereich des Quetschventilgehäuses in Einsteckrichtung zu begrenzen und eine definierte Positionierung des Quetschventils in dem zweiten Bereich des Quetschventilgehäuses sicherzustellen, ist ein entsprechender Anschlag vorgesehen. Insbesondere wird der Anschlag durch eine erste Anschlagfläche des Quetschventilgehäuses und eine zweite Anschlagfläche des Quetschventils gebildet. Hierbei bietet es sich an, dass im eingesteckten Zustand des Quetschventils die zweite Anschlagfläche an der ersten Anschlagfläche vorzugsweise abdichtend anliegt.

Um den zweiten Bereich des Quetschventilgehäuses an eine Pulverleitung, insbesondere Pulverschlauch anschließen zu können, ist gemäß Realisierungen der erfindungsgemäßen Pulverdichtstrompumpe vorgesehen, dass an einem der Pulverförderkammer abgewandten Endabschnitt des zweiten Bereichs des Quetschventilgehäuses eine Schnittstelle ausgebildet ist, über die der zweite Bereich des Quetschventilgehäuses lösbar mit einer Pulverleitung oder einem Pulverschlauch verbindbar ist.

Insbesondere bietet es sich an, dass die Schnittstelle als Gewindebereich und vorzugsweise als Außengewindebereich ausgeführt und ausgebildet ist, beispielsweise eine Überwurfmutter aufzunehmen, um dadurch einen Schlauchanschluss an den zweiten Bereich des Quetschventilgehäuses lösbar anzuschließen. Selbstverständlich kommen hier aber auch andere Lösungen in Frage.

Gemäß Ausführungsformen der erfindungsgemäßen Pulverdichtstrompumpe ist vorgesehen, dass das Quetschventilgehäuse einen zwischen seinem ersten Bereich und seinem zweiten Bereich ausgebildeten Übergangsbereich aufweist, welcher ausgebildet ist, einen durch den Querschnitt des Filterelements der Pulverförderkammer vorgegebenen effektiven Strömungsquerschnitt der Pulverförderkammer zumindest teilweise auf einen effektiven Strömungsquerschnitt des Quetschventils in seinem geöffneten Zustand zu reduzieren. Hierzu ist der Übergangsbereich insbesondere zumindest bereichsweise trichter- oder konusförmig ausgeführt.

Bei dieser Ausgestaltung der erfindungsgemäßen Pulverdichtstrompumpe kann vorgesehen sein, dass der Übergangsbereich des Quetschventilgehäuses ausgebildet ist, zumindest bereichsweise ein insbesondere zumindest bereichsweise konusförmiges, gasdurchlässiges Filterendstück der Pulverförderkammer aufzunehmen. Bei diesem Filterendstück handelt es sich insbesondere um eine von dem Filterelement der Pulverförderkammer separat ausgeführte Komponente.

Dabei bietet es sich an, dass das Filterendstück über den zweiten Bereich des Quetschventilgehäuses in den Übergangsbereich des Quetschventilgehäuses steckbar/einsteckbar ist.

Vorzugsweise sind bei den zuletzt genannten Ausführungsformen Dichtmittel insbesondere in Gestalt von O-Ringen derart vorgesehen, dass in einem in den Übergangsbereich des Quetschventilgehäuses aufgenommenen und insbesondere eingesteckten Zustand des Filterendstücks dieses gegenüber dem zweiten Bereich des Quetschventilgehäuses und gegenüber einem zwischen dem Mantelkörper und dem Filterelement gebildeten, insbesondere ringförmigen Spaltraum abgedichtet ist.

Alternativ oder zusätzlich hierzu ist gemäß Realisierungen der Pulverdichtstrompumpe vorgesehen, dass in einem in den Übergangsbereich des Quetschventilgehäuses aufgenommenen und insbesondere eingesteckten Zustand des Filterendstücks zwischen einem Innenwandbereich des Übergangsbereichs des Quetschventilgehäuses und dem Filterendstück ein insbesondere ringförmiger Spaltraum gebildet ist, der bedarfsweise über einen Druckluftanschluss des Quetschventilgehäuses mit Druckluft beaufschlagbar ist, insbesondere um den Endbereich der Pulverförderkammer von Pulverablagerungen freizuhalten oder um Pulverablagerungen am Endbereich der Pulverförderkammer zu entfernen.

Nachfolgend wird unter Bezugnahme auf die beiliegenden Zeichnungen eine exemplarische Ausführungsform der Erfindung näher beschrieben.

Es zeigen:
- FIG.1: schematisch und in einer isometrischen Ansicht eine exemplarische Ausführungsform der erfindungsgemäßen Pulverdichtstrompumpe mit zwei parallel zueinander angeordneten Pulverförderkammern;
- FIG. 2: schematisch und in einer Explosionsansicht die in FIG. 1 gezeigte exemplarische Ausführungsform der erfindungsgemäßen Pulverdichtstrompumpe;
- FIG. 3: schematisch und in einer Schnittansicht einen Endbereich der Pulverförderkammer der Pulverdichtstrompumpe gemäß FIG. 1; und
- FIG. 4a bis 4h: schematisch der Vorgang zum Demontieren bzw. Wechseln der Quetschventile und Filterelemente der Pulverdichtstrompumpe gemäß FIG.1.

Nachfolgend werden unter Bezugnahme auf die Zeichnungen der Aufbau und die Funktionsweise einer Pulverdichtstrompumpe 1 gemäß einer exemplarischen Ausführungsform der vorliegenden Erfindung beschrieben. Bei der exemplarischen Ausführungsform der erfindungsgemäßen Pulverdichtstrompumpe 1 kommen zwei parallel zueinander angeordnete Pulverförderkammern 2, 2' zum Einsatz.

Jede der beiden parallel zueinander angeordneten Pulverförderkammern 2, 2' weisen einen insbesondere zylinderförmigen Hauptkörperbereich 3 mit einem zumindest im Wesentlichen einheitlichen effektiven Strömungsquerschnitt auf. Jeder insbesondere zylinderförmige Hauptkörperbereich 3 der beiden Pulverförderkammern 2, 2' weist ein zylinderförmiges, insbesondere kreiszylinderförmiges Mantelrohr 4 (bzw. Mantelkörper 4) und ein im Inneren des Mantelrohrs 4 aufgenommenes Filterelement 5 auf. Bei dem Filterelement 5 des Hauptkörperbereichs 3 der Pulverförderkammer 2, 2' handelt es sich insbesondere um ein zylinderförmiges Filterelement 5.

Jede Pulverförderkammer 2, 2' weist einen Pulvereinlass mit einem Pulvereinlassventil 6 und einen Pulverauslass mit einem Pulverauslassventil 7 auf. Die jeweiligen Pulvereinlassventile 6 werden im Folgenden auch als "erste Ventile" bzw. "ansaugseitige Ventile" bezeichnet. Die Pulverauslassventile 7 werden auch als "zweite Ventile" bzw. "förderseitige Ventile" bezeichnet.

An den jeweiligen ansaugseitigen und förderseitigen Endbereichen der Hauptkörperbereiche der Pulverförderkammern 2, 2' weisen einen Übergangsbereich auf, der ausgebildet ist, einen effektiven Strömungsquerschnitt der Pulverförderkammer 2, 2' auf einen effektiven Strömungsquerschnitt der entsprechend angeschlossenen Pulverleitung 9 bzw. auf den effektiven Strömungsquerschnitt des zwischen der Pulverförderkammer 2, 2' und der Pulverleitung 9 angeordneten Ventils 6, 7 zu reduzieren. Der Übergangsbereich ist dabei insbesondere zumindest bereichsweise als konusförmiger Bereich ausgeführt.

Die Übergangsbereiche dienen dazu, die Nennweite des Hauptkörperbereichs 3 der Pulverförderkammer 2, 2', d.h. den inneren Durchmesser des Hauptkörperbereichs 3 der Pulverförderkammer 2, 2', auf die Nennweite der entsprechend angeschlossenen Pulverleitung 9 bzw. auf die Nennweite des zwischengeschalteten Ventils 6, 7 anzupassen/zu reduzieren.

Die Übergangsbereiche weisen ein insbesondere konusförmiges Filterendstück 10 auf, welches in einem Quetschventilgehäuse 11 aufgenommen ist.

Während eines Ansaugprozesses wird in einer der Pulverförderkammern 2, 2' der Pulverdichtstrompumpe 1 ein Vakuum (Unterdruck) erzeugt. Der Unterdruck saugt das zu fördernde Pulver, insbesondere Beschichtungspulver, über den entsprechenden Pulvereinlass in die Pulverförderkammer 2, 2' ein. Das feinporöse Filterelement 5 in dem Hauptkörperbereich 3 der Pulverförderkammer 2, 2' scheidet das Pulver ab. Die Pulverförderkammer 2, 2' ist während des Ansaugprozesses an der Ansaugseite bzw. Förderseite durch das entsprechende förderseitige Ventil geschlossen.

Während des Förderprozesses hingegen wird das ansaugseitige Ventil 6 an der Pulvereinlassseite der Pulverförderkammer 2, 2' geschlossen, während das förderseitige Ventil 7 geöffnet wird. Das zuvor während des Ansaugprozesses in die Pulverförderkammer 2, 2' eingesaugte Beschichtungspulver wird dann mittels Überdruck, das mit Druckluft durch das feinporöse Filterelement 5 des Hauptkörperbereichs 3 der Pulverförderkammer 2, 2' aufgebaut wird, aus der Pulverförderkammer 2, 2' gepresst und weiterbefördert.

Der Ansaug- und Förderprozess alterniert zwischen den beiden parallel zueinander angeordneten Pulverförderkammern 2, 2'. Mit anderen Worten, die beiden parallel zueinander angeordneten Pulverförderkammern 2, 2' werden gegenphasig betrieben.

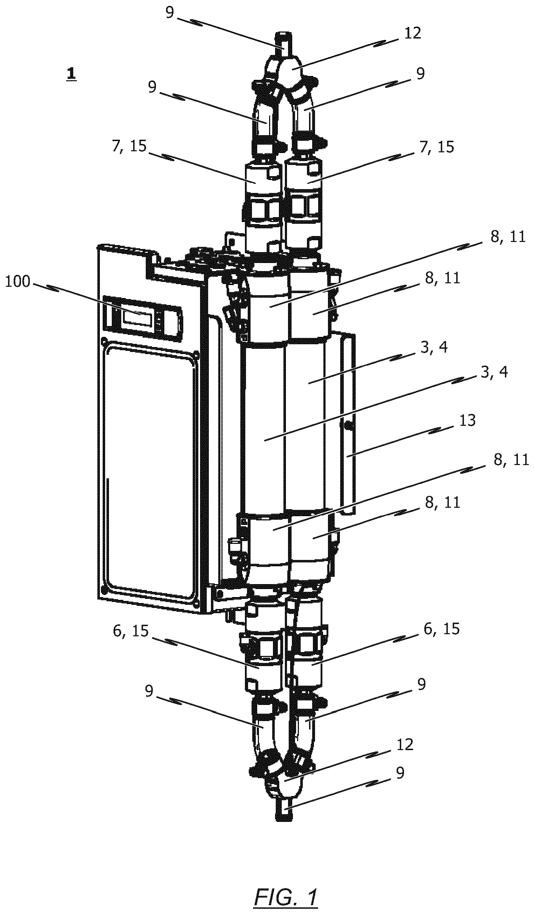

FIG. 1 zeigt in einer isometrischen Ansicht den Aufbau einer Pulverdichtstrompumpe 1 mit zwei parallel zueinander angeordneten Pulverförderkammern 2, 2' gemäß einer exemplarischen Ausführungsform der vorliegenden Erfindung. Die Pulverdichtstrompumpe 1 weist zwei Pulverförderkammern 2, 2' auf, wobei jede der beiden Pulverförderkammern 2, 2' einen zylinderförmigen Hauptkörperbereich 3 mit einem zylinderförmigen und insbesondere kreiszylinderförmigen Mantelrohr 4 und einem im Inneren des Mantelrohrs 4 angeordneten gasdurchlässigen Filterelement 5 aufweist. Das Filterelement 5 ist vorzugsweise ein steifer Körper aus Sintermaterial, vorzugsweise aus gesintertem Metall, zum Beispiel Bronze oder Aluminium, oder aus gesintertem Kunststoff oder einer gesinterten Materialmischung.

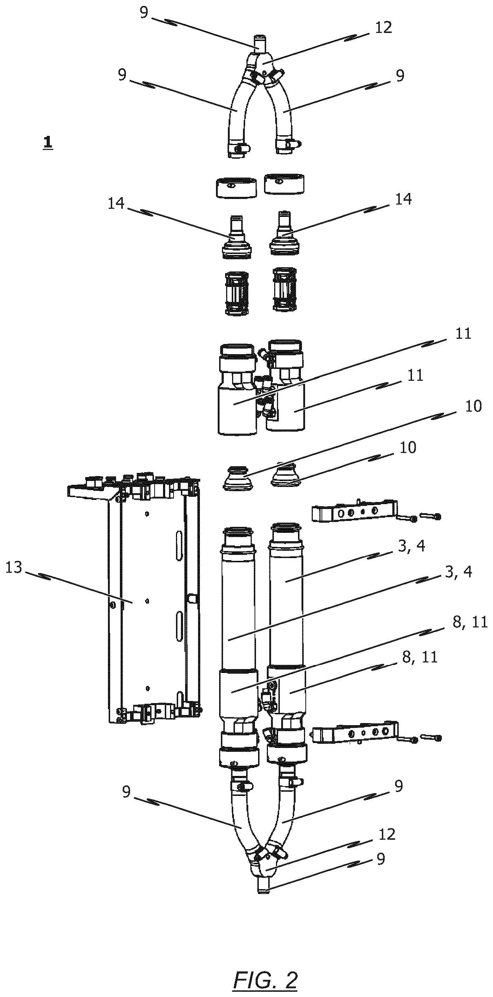

Wie es insbesondere der in FIG. 2 gezeigten Explosionsdarstellung entnommen werden kann, weist der Hauptkörperbereich 3 einer jeden Pulverförderkammer 2, 2' ansaugseitig und förderseitig einen mit dem Hauptkörperbereich 3 lösbar verbundenen oder verbindbaren Übergangsbereich auf, der Teil der Pulverförderkammer 2, 2' ist. Der Übergangsbereich dient dazu, die Nennweite des Hauptkörperbereichs 3 der Pulverförderkammer 2, 2' auf die Nennweite eines ansaugseitigen bzw. förderseitigen Ventils 6, 7 anzupassen/zu reduzieren.

Um hierzu die Nennweite, d.h. den inneren Durchmesser des zylinderförmigen Hauptkörperbereichs 3 der Pulverförderkammer 2, 2', entsprechend auf die (reduzierte) Nennweite des entsprechenden Ventils 6, 7 bzw. der entsprechenden Pulverleitung 9 zu reduzieren, weist jeder Übergangsbereich ein sich insbesondere konisch in Richtung des Ventils 6, 7 bzw. in Richtung der Förderleitung verjüngendes Filterendstück 10 auf.

Das Filterendstück 10 ist - wie auch das Filterelement 5 des Hauptkörperbereichs 3 - vorzugsweise ein steifer Körper insbesondere aus Sintermaterial, vorzugsweise aus gesintertem Metall, zum Beispiel Bronze oder Aluminium, oder aus gesintertem Kunststoff oder einer gesinterten Materialmischung. Selbstverständlich kommen aber auch andere Ausführungsformen für das sich konisch in Richtung des jeweiligen Ventils 6, 7 verjüngenden Filterelements 10 des Übergangsbereichs in Frage.

Das sich konisch in Richtung des entsprechenden Ventils 6, 7 verjüngende Filterendstück 10 definiert den effektiven Strömungsquerschnitt des Übergangsbereichs, um die Nennweite des Hauptkörperbereichs 3 der Pulverförderkammer 2, 2' entsprechend an die Nennweite des an dem jeweiligen Endbereich der Pulverförderkammer 2, 2' angeschlossenen Ventils 6, 7 anzupassen.

Wie es der Explosionsdarstellung in FIG. 2 entnommen werden kann, ist das jeweilige sich konisch verjüngende Filterendstück 10 des Übergangsbereichs lösbar mit dem entsprechenden Endbereich des Hauptkörperbereichs 3 der Pulverförderkammer 2, 2' verbunden, insbesondere über eine mit Hilfe einer Schraubverbindung oder mit Hilfe einer anderen lösbaren Verbindung, beispielsweise mit Hilfe eines Bajonettverschlusses, fixierbare Steckverbindung verbindbar.

Jeder Übergangsbereich weist ferner ein entsprechendes Quetschventilgehäuse 11 auf, in welchem das sich konisch verjüngende Filterendstück 10 aufnehmbar ist. Zwischen dem Innenbereich des Quetschventilgehäuses 11 und dem Außenbereich des sich konisch verjüngenden Filterelements 10 ist ein Luftraum gebildet, der über eine entsprechende Luftleitung bedarfsweise mit Überdruck beaufschlagbar ist.

An dem Pulvereinlass einer jeden Pulverförderkammer 2, 2' der in FIG. 1 und FIG. 2 schematisch gezeigten Pulverdichtstrompumpe 1 ist jeweils ein erstes an dem ansaugseitigen Endbereich der Pulverförderkammer 2, 2' angeschlossenes Quetschventil 6 vorgesehen. Ein zweites Quetschventil 7 ist an dem jeweiligen förderseitigen Endbereich der Pulverförderkammer 2, 2', d.h. an dem förderseitigen Endbereich des Übergangsbereichs der Pulverförderkammer 2, 2' angeschlossen.

Die Pulvereinlassseite der beiden ersten (ansaugseitigen) Ventile 6 sind bei der dargestellten Ausführungsform über Zufuhrleitungszweige eines Y-Verbindungsstücks 12 mit einer Pulverzuleitung 9 verbunden, welche beispielsweise zu einem Pulverbehälter (in den Zeichnungen nicht dargestellt) führt. Hierzu werden Schlauchverbinder verwendet, um die Pulvereinlassseite der beiden ersten Ventile 6 (Quetschventile) mit den Zufuhrleitungszweigen des Y-Verbindungsstücks 12 zu verbinden.

Denkbar ist es allerdings auch, dass an Stelle eines Y-Verbindungsstücks 12 die jeweiligen Pulvereinlassseiten der ersten (ansaugseitigen) Ventile/Quetschventile 6 über getrennte Pulverzufuhrleitungen mit einem oder mit zwei verschiedenen Pulverbehältern strömungsmäßig verbunden sind.

Die Pulverauslässe der beiden zweiten (förderseitigen) Ventil/Quetschventile 7 sind bei der dargestellten Ausführungsform durch Abgabeleitungszweige, beispielsweise ebenfalls eines Y-förmigen Leitungsverbindungsstücks 12, mit einem Ende eines Pulverabgabeschlauchs 9 verbunden, dessen anderes Ende in einen weiteren (nicht dargestellten) Pulverbehälter mündet. Die Pulverabgabeleitung kann eine steife Rohrleitung sein, ist jedoch vorzugsweise ein flexibler Schlauch.

Bei der in FIG. 1 und FIG. 2 dargestellten Ausführungsform sind die Pulverförderkammern 2, 2' jeweils in einer Halterung 13 aufgenommen und dort arretiert. Die Pulverförderkammern 2, 2' sind insbesondere mit Hilfe einer lösbaren Schraub- oder Bajonettverbindung mit der Halterung 13 verbunden.

Bei der in den Zeichnungen gezeigten exemplarischen Ausführungsform der erfindungsgemäßen Pulverdichtstrompumpe 1 ist jedes erste und zweite Ventil 6, 7 als Quetschventil ausgeführt, wobei jedem Quetschventil 6, 7 ein elastisch verformbares Ventilelement 14 zugeordnet ist, das im Inneren eines entsprechenden Quetschventilgehäuses 11 derart angeordnet ist, dass der Einlass des Quetschventils 6, 7 mit dem Auslass des Quetschventils 6, 7 über das als elastisch verformbares Ventilelement 14 gebildete Ventilelement in Fluidverbindung bringbar ist.

Das Quetschventilgehäuse 11 weist einen Anschluss 17 auf, um bedarfsweise Druckluft in den zwischen der Innenwand des Quetschventilgehäuses 11 und den im Inneren des Quetschventilgehäuses 11 angeordneten Ventilelement 14 gebildeten Raums zuzuführen. Bei Zufuhr von Druckluft wird das Ventilelement 14 elastisch verformt, so dass die Fluidverbindung zwischen dem Einlass und dem Auslass des Quetschventils 6, 7 unterbrochen ist. Liegt hingegen keine Druckluft in dem Zwischenraum zwischen der Innenwand des Quetschventilgehäuses 11 und dem im Inneren des Quetschventilgehäuses 11 angeordneten Ventilelements 14 vor, geht das zuvor elastisch verformte Ventilelement 14 wieder in seinen Ausgangszustand über, in welchem eine Fluidverbindung zwischen dem Einlass und dem Auslass des Quetschventilgehäuses 11 vorliegt.

Über den mindestens einen Anschluss des Quetschventils 6, 7 kann auch ein Vakuumanschluss angeschlossen werden, um zum raschen Öffnen des Quetschventils die in dem Zwischenraum zuvor eingebrachte Druckluft zu evakuieren.

Jedes Quetschventil 6, 7 weist ein zumindest bereichsweise schlauchförmiges Ventilelement 14 auf, dessen Umfangswand quer zur Ventilelement-Längsachse zusammenquetschbar ist, um den Durchflussquerschnitt zu verändern.

Jedes Quetschventil 6, 7 weist ferner eine zumindest im Wesentlichen rohrförmige Stützstruktur 19 auf, in welcher das Ventilelement 14 zumindest bereichsweise aufgenommen ist. Die Stützstruktur 19 besteht aus zwei in der Umfangsrichtung der Umfangswand des Ventilelements 14 um die Umfangswand herum aneinander gereihte jeweils einen bogenförmigen Querschnitt aufweisende Schalenelemente, die in bezüglich der Ventilelement-Längsachse radialer Richtung außen an das Ventilelement 14 angesetzt sind.

Die beiden Schalenelemente der Stützstruktur 19 weisen jeweils eine Bogenerstreckung von 180° auf. Des Weiteren weisen die beiden Schalenelemente erste und zweite Rastmittel auf, über welche die beiden Schalenelemente zum Ausbilden der Stützstruktur 19 formschlüssig und insbesondere lösbar miteinander verbindbar sind.

Zumindest in einem miteinander verbundenen Zustand der Schalenelemente weist die Stützstruktur 19 insbesondere schlitzförmige Öffnungen auf, durch die hindurch Druckluft als Quetschmittel auf die Umfangswand des Ventilelements 14 einwirken kann, um die Umfangswand des Ventilelements 14 zur Verringerung des zur Verfügung gestellten Durchflussquerschnitts zusammen zu quetschen.

Zurückkommend auf die Darstellungen in FIG. 1, FIG. 2 und FIG. 3 ist anzumerken, dass die Pulverdichtstrompumpe 1 ein an den jeweiligen Endbereichen der Pulverförderkammer 2, 2' angeordnetes Quetschventilgehäuse 11 aufweist, welches lösbar mit dem entsprechenden Endbereich der Pulverförderkammer 2, 2' verbunden oder verbindbar ist. Das jeweilige Quetschventilgehäuse 11 ist ausgebildet, das Quetschventil 6, 7, welches als eine patronen- oder kartuschenartige Komponente ausgeführt ist, austauschbar aufzunehmen.

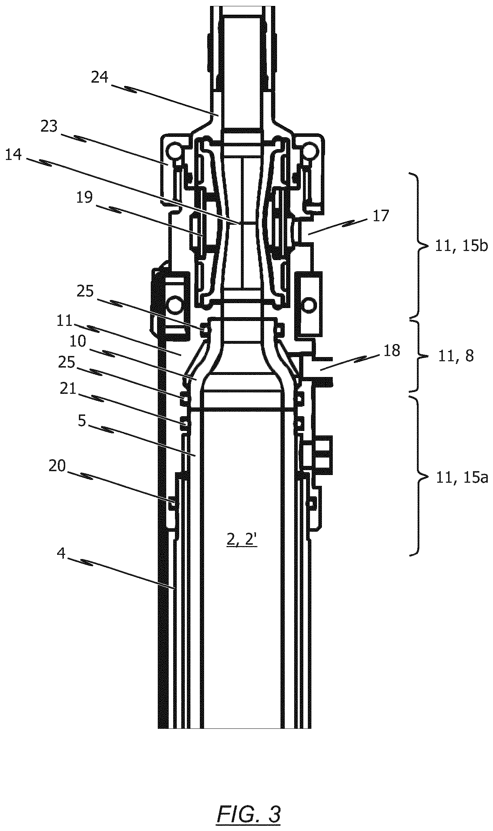

Der Schnittansicht in FIG. 3 kann entnommen werden, dass das Quetschventilgehäuse 11 einen Bereich zur insbesondere austauschbaren Aufnahme des Quetschventils 6, 7 und einen gegenüberliegenden Bereich aufweist, über den das Quetschventilgehäuse 11 mit dem Mantelkörper 4 der Pulverförderkammer 2, 2' insbesondere steckbar verbindbar ist. Insbesondere ist das Quetschventilgehäuse 11 eine Komponente, die mit dem Mantelkörper 4 der Pulverförderkammer 2, 2' lös- oder austauschbar verbindbar ist.

Der zweite Bereich 15 b des Quetschventilgehäuses 11 ist ausgebildet, einen Endbereich des Filterelements 5 der Pulverförderkammer 2, 2' aufzunehmen.

Im Einzelnen ist bei der in den Zeichnungen dargestellten exemplarischen Ausführungsform der erfindungsgemäßen Pulverdichtstrompumpe 1 vorgesehen, dass die Stützstruktur 19 des Quetschventils 6, 7 einen im Hinblick auf die Ventilelement-Längsachse radialen und mittleren Außendurchmesser aufweist, der zumindest im Wesentlichen dem im Hinblick auf die Filterelement-Längsachse radialen und mittleren Innendurchmesser des Filterelements 5 entspricht, wobei sich der mittlere Außendurchmesser der Stützstruktur 19 von dem mittleren Innendurchmesser des Filterelements vorzugsweise um weniger als 10% und noch bevorzugter um weniger als 5% unterscheidet.

Insbesondere ist das Quetschventil 6, 7 als eine patronen- oder kartuschenartige Komponente ausgeführt, die als solche austauschbar in einem Quetschventilgehäuse 11 der Pulverdichtstrompumpe 1 aufgenommen oder aufnehmbar ist. Das Quetschventilgehäuse 11 umgibt einen Aufnahmeraum. Bevorzugt umfasst das Quetschventilgehäuse 11 einen ersten rohrförmigen Bereich 15a und einen über einen Fluidkanal bzw. Pulverförderkanal mit dem ersten Bereich 15a verbundenen zweiten Bereich 15b. Das Quetschventilgehäuse 11 ist lösbar mit der Pulverförderkammer 2, 2' verbunden. Es ist mit einem Fluidanschluss ausgestattet, der von einem axialen Durchgangskanal gebildet ist. Über den Fluidanschluss ist ein das Quetschventil 6, 7 steuerndes Druckmittel zuführbar.

Wie es insbesondere der Schnittansicht in FIG. 3 entnommen werden kann, weist die Pulverdichtstrompumpe 1 je Quetschventil 6, 7 ein als Endstück der Pulverförderkammer 2, 2' ausgebildetes Quetschventilgehäuse 11 auf.

Das lösbar und getrennt von dem Mantelkörper 4 der Pulverförderkammer 2, 2' ausgeführte Quetschventilgehäuse 11 weist einen der Pulverförderkammer 2, 2' zugewandten ersten Bereich 15a und einen gegenüberliegenden zweiten Bereich 15b auf. Der erste Bereich 15a des Quetschventilgehäuses 11 ist ausgebildet, mittels einer Steckverbindung mit dem Endbereich der Pulverförderkammer 2, 2' verbindbar zu sein, wobei andererseits der zweite Bereich 15b des Quetschventilgehäuses 11 ausgebildet ist, das Quetschventil 6, 7 austauschbar aufzunehmen.

Bei der in den Zeichnungen gezeigten exemplarischen Ausführungsform der erfindungsgemäßen Pulverdichtstrompumpe 1 ist vorgesehen, dass bei dem Endbereich der Pulverförderkammer 2, 2' sich das Filterelement 5 der Pulverförderkammer 2, 2' über den Endbereich des Mantelkörpers 4 hinaus erstreckt. Insbesondere ist dabei - wie in FIG. 3 angedeutet - vorgesehen, dass der erste Bereich 15a des Quetschventilgehäuses 11 ausgebildet ist, den sich über den Endbereich des Mantelkörpers 4 hinaus ersteckenden Bereich des Filterelements 5 aufzunehmen.

Der erste Bereich 15a des Quetschventilgehäuses 11 weist einen dem Mantelkörper 4 zugewandten ersten Abschnitt und einen gegenüberliegenden zweiten Abschnitt auf. Dabei sind der erste Abschnitt des Quetschventilgehäuses 11 und der Endbereich des Mantelkörpers 4 der Pulverförderkammer 2, 2' ausgebildet, eine lösbare Steckverbindung zwischen dem Quetschventilgehäuse 11 und dem Mantelkörper 4 auszubilden.

Im Einzelnen ist bei der in den Zeichnungen gezeigten Ausführungsform vorgesehen, dass der Endbereich des Mantelkörpers 4 als Spitzende für den Anschluss an den ersten Abschnitt des Quetschventilgehäuses 11 ausgebildet ist.

Der Schnittansicht gemäß FIG. 3 ist ferner zu entnehmen, dass ein Anschlag vorgesehen ist, welcher ausgebildet ist, eine Bewegung des Quetschventilgehäuses 11 relativ zu dem Mantelkörper 4 der Pulverförderkammer 2, 2' in Steckrichtung zu begrenzen. Der Anschlag wird dabei durch eine am Endbereich des Mantelkörpers 4 ausgebildete erste Anschlagfläche und eine am ersten Bereich 15a des Quetschventilgehäuses 11 ausgebildete zweite Anschlagfläche gebildet. Nach dem Ausbilden der Steckverbindung zwischen dem Quetschventilgehäuse 11 und dem Endbereich der Pulverförderkammer 2, 2' liegt die zweite Anschlagfläche an der ersten Anschlagfläche vorzugsweise abdichtend an.

Der Darstellung in FIG. 3 ist ferner zu entnehmen, dass zwischen dem ersten Abschnitt des Quetschventilgehäuses 11 und dem Endbereich des Mantelkörpers 4 ein elastisches Dichtmittel "= in Gestalt eines O-Rings vorgesehen ist.

Andererseits ist der zweite Abschnitt des Quetschventilgehäuses 11 ausgebildet, einen sich über den Endbereich des Mantelkörpers 4 hinaus erstreckenden Bereich des Filterelements 5 aufzunehmen, wobei zwischen dem zweiten Abschnitt des Quetschventilgehäuses 11 und dem sich über den Endbereich des Mantelkörpers 4 hinaus erstreckenden Bereich des Filterelements 5 ein elastisches Dichtmittel 21 ebenfalls in Gestalt eines O-Rings vorgesehen ist.

Wie in FIG. 2 dargestellt, kann ein lösbares Sicherungselement 29 beispielsweise in Gestalt einer Klammer vorgesehen sein, um das Quetschventilgehäuse 11 mit dem eingesteckten Mantelkörper 4 der Pulverdichtstrompumpe 1 an einer Halterung 13 der Pulverdichtstrompumpe 1 zu fixieren, und um so die Steckverbindung zwischen dem Quetschventilgehäuse 11 und dem Mantelkörper 4 der Pulverförderkammer 2, 2' lösbar zu fixieren.

Das Quetschventil 6, 7 ist - wie bereits ausgeführt - vorzugsweise als patronen- oder kartuschenartige Komponente ausgeführt und weist ein zumindest bereichsweise schlauchförmiges Ventilelement 14 auf, dessen Umfangswand quer zur Ventilelement-Längsachse zusammenquetschbar ist, um den Durchflussquerschnitt zu verändern. Darüber hinaus weist das Quetschventil 6, 7 vorzugsweise eine zumindest im Wesentlichen rohrförmige Stützstruktur 19 auf, in welcher das (schlauchförmige) Ventilelement 14 zumindest bereichsweise und insbesondere austauschbar aufgenommen ist.

Das patronen- oder kartuschenartige Quetschventil 6, 7 ist in den zweiten Bereich 15b des Quetschventilgehäuses 11 einsteckbar, wobei im eingesteckten Zustand zwischen dem Quetschventil 6, 7 und einem Innenwandbereich des zweiten Bereichs 15b des Quetschventilgehäuses 11 eine mit Druckluft beaufschlagbare, insbesondere ringförmige Druckkammer gebildet wird. Hierzu ist vorgesehen, dass das Quetschventilgehäuse 11 einen Druckluftanschluss 17 aufweist, über den der Druckkammer bedarfsweise Druckluft zuführbar ist, um das entsprechende Quetschventil 6, 7 bzw. das schlauchförmige Ventilelement 14 des Quetschventils 6, 7 zu manipulieren.

An einem der Pulverförderkammer 2, 2' abgewandten Endabschnitt des zweiten Bereichs 15b des Quetschventilgehäuses 11 ist eine Schnittstelle in Gestalt eines Außengewindebereichs ausgebildet, über die der zweite Bereich 15b des Quetschventilgehäuses 11 lösbar mit einer Pulverleitung 9 verbindbar ist.

Insbesondere ist bei der in den Zeichnungen dargestellten Ausführungsform vorgesehen, dass mit Hilfe einer Überwurfmutter 23 ein Schlauchanschluss 24 an den zweiten Bereich 15b des Quetschventilgehäuses 11 lösbar anschließbar ist.

Der Schnittansicht in FIG. 3 ist zu entnehmen, dass das Quetschventilgehäuse 11 einen zwischen seinem ersten Bereich 15a und seinem zweiten Bereich 15b ausgebildeten Übergangsbereich 8 aufweist, welcher ausgebildet ist, einen durch den Querschnitt des Filterelements 5 vorgegebenen effektiven Strömungsquerschnitt der Pulverförderkammer 2, 2' zumindest teilweise auf einen effektiven Strömungsquerschnitt des Quetschventils 6, 7 in seinem geöffneten Zustand zu reduzieren. Der Übergangsbereich 8 ist dabei insbesondere zumindest bereichsweise trichter- oder konusförmig ausgeführt.

Der Übergangsbereich 8 des Quetschventilgehäuses 11 ist bei der dargestellten exemplarischen Ausführungsform der erfindungsgemäßen Pulverdichtstrompumpe 1 ausgebildet, zumindest bereichsweise ein konusförmiges und gasdurchlässiges Filterendstück 10 der Pulverförderkammer 2, 2' aufzunehmen, wobei das Filterendstück 10 insbesondere separat von dem Filterelement 5 der Pulverförderkammer 2, 2' ausgeführt ist. Insbesondere ist das Filterendstück 10 über den zweiten Bereich 15b des Quetschventilgehäuses 11 in den Übergangsbereich 8 des Quetschventilgehäuses 11 steckbar.

Auch hier sind wieder Dichtmittel 25, insbesondere in Gestalt von O-Ringen, derart vorgesehen, dass in einem in den Übergangsbereich 8 des Quetschventilgehäuses 11 aufgenommenen und insbesondere eingesteckten Zustand des Filterendstücks 10 dieses gegenüber dem zweiten Bereich 15b des Quetschventilgehäuses 11 und gegenüber einem zwischen dem Mantelkörper 4 und dem Filterelement 5 gebildeten, insbesondere ringförmigen Spaltraum abgedichtet ist.

In einem in den Übergangsbereich 8 des Quetschventilgehäuses 11 aufgenommenen und insbesondere eingesteckten Zustand des Filterendstücks 10 ist zwischen einem Innenwandbereich des Übergangsbereichs 8 des Quetschventilgehäuses 11 und dem Filterendstück 10 ein insbesondere ringförmiger Spaltraum gebildet, der bedarfsweise über einen Druckluftanschluss 17 des Quetschventilgehäuses 11 mit Druckluft beaufschlagbar ist, insbesondere um den Endbereich der Pulverförderkammer 2, 2' von Pulverablagerungen freizuhalten oder um Pulverablagerungen am Endbereich der Pulverförderkammer 2, 2' zu entfernen.

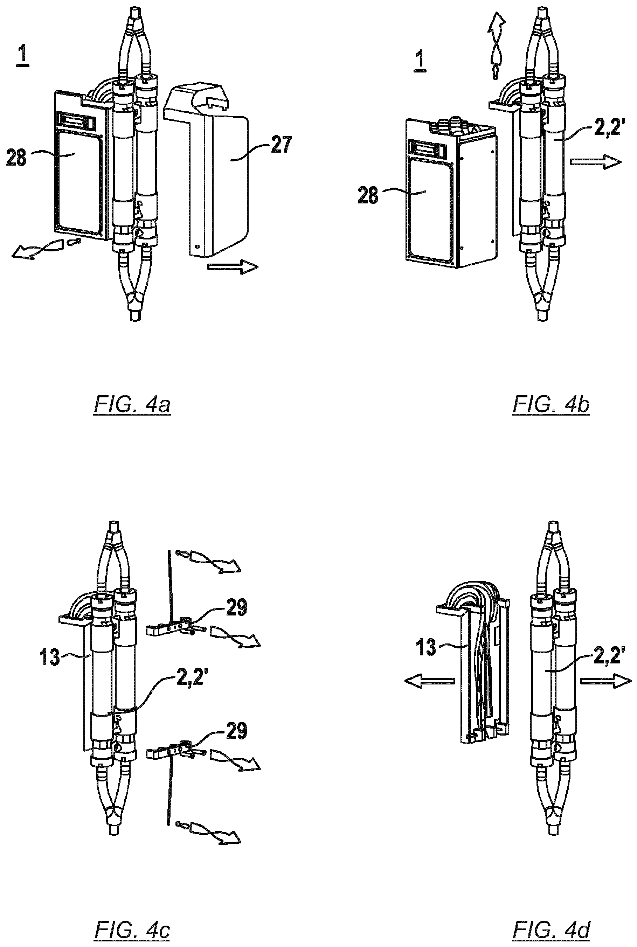

In FIG. 4a bis FIG. 4h ist gezeigt, wie bei der exemplarischen Ausführungsform der erfindungsgemäßen Pulverdichtstrompumpe 1 die Quetschventile 6, 7 oder das Filterelement 5 demontiert oder gewechselt werden können.

Hierzu wird - wie in FIG. 4a angedeutet - zunächst eine Gehäuseschale 27 von den beiden parallel zueinander angeordneten Pulverförderkammern 2, 2' entfernt. Vorzugsweise erfolgt dies durch Lösen eines Schnellverschlusses.

Anschließend wird - wie in FIG. 4b angedeutet - die Steuerung 28 von den Pulverförderkammern 2, 2' getrennt.

Danach werden entsprechende Klammern 29 gelöst, über welche die Pulverförderkammern 2, 2' mit der Halterung 13 der Pulverdichtstrompumpe 1 verbunden sind. Wie in FIG. 4c und FIG. 4d angedeutet, sind dann die Pulverförderkammern 2, 2' von der Halterung 13 getrennt.

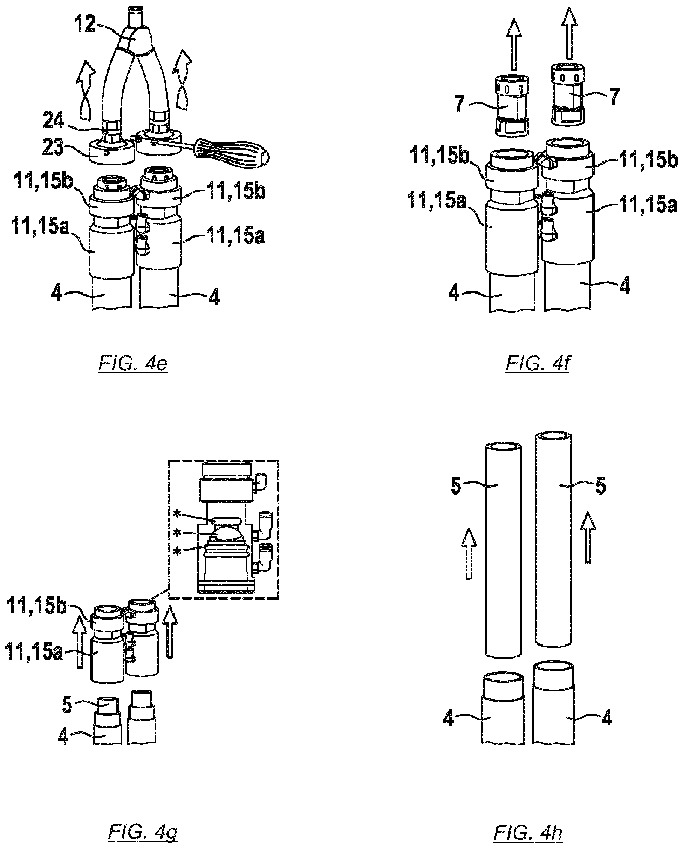

Zum Austausch der Quetschventile 6, 7 ist es lediglich notwendig, die Schnittstelle zwischen dem Quetschventilgehäuse 11 und der Pulverleitung 9 zu lösen. Die Schnittstelle ist vorzugsweise durch eine Überwurfmutter 23 gebildet, so dass durch Lösen der Überwurfmutter 23 der Schlauchanschluss 24 von dem zweiten Bereich 15b des Quetschventilgehäuses 11 entfernbar ist (siehe FIG. 4e).

Anschließend können die insbesondere kartuschen- oder patronenartigen Quetschventile 6, 7 aus dem zweiten Bereich 15b des Quetschventilgehäuses 11 entnommen werden, wie es in FIG. 4f gezeigt ist.

Um auch die Filterelemente 5 der Pulverförderkammern 2, 2' austauschen zu können, ist es lediglich notwendig, das Quetschventilgehäuse 11 von den Endbereichen der Pulverförderkammern 2, 2' abzuziehen, wie es in FIG. 4g angedeutet ist. Anschließend lassen sich die Filterelemente 5 der Pulverförderkammern 2, 2' entfernen (vgl. FIG. 4h).

Die Erfindung ist nicht auf die in den Zeichnungen gezeigten Ausführungsformen beschränkt, sondern ergibt sich aus einer Zusammenschau sämtlicher hierin offenbarter Merkmale. Der Schutzumfang der Erfindung wird durch den jeweiligen Gegenstand der nachfolgenden Patentansprüche definiert.

### Bezugszeichenliste

- 1: Pulverdichtstrompumpe
- 2, 2': Pulverförderkammer
- 3: Hauptkörperbereich
- 4: Mantelrohr/Mantelkörper
- 5: Filterelement
- 6: Pulvereinlassventil/Quetschventil
- 7: Pulverauslassventil/Quetschventil
- 8: Übergangsbereich des Quetschventilgehäuses
- 9: Pulverleitung
- 10: konusförmiges Filterendstück
- 11: Quetschventilgehäuse
- 12: Y-Verbindungsstück
- 13: Halterung
- 14: Ventilelement (Quetschventil)
- 15a: erster Bereich des Quetschventilgehäuses
- 15b: zweiter Bereich des Quetschventilgehäuses
- 17: Druckluftanschluss am Quetschventilgehäuse
- 18: Druckluftanschluss am Quetschventilgehäuse
- 19: Stützstruktur
- 20: erstes Dichtmittel
- 21: zweites Dichtmittel
- 23: Überwurfmutter
- 24: Schlauchanschluss
- 25: drittes Dichtmittel
- 27: Gehäuseschale
- 28: Steuerung
- 29: Klammer

## Patentansprüche

1. Pulverdichtstrompumpe (1) zum Fördern von pulverigen Materialien, insbesondere Beschichtungspulver, wobei die Pulverdichtstrompumpe (1) mindestens eine Pulverförderkammer (2, 2') mit einem zumindest bereichsweise in einem Mantelkörper (4) aufgenommenen gasdurchlässigen Filterelement (5) und mindestens ein an einem Endbereich der Pulverförderkammer (2, 2') angeschlossenes oder anschließbares Quetschventil (6, 7) aufweist, wobei die Pulverdichtstrompumpe (1) ein insbesondere als Endstück der Pulverförderkammer (2, 2') ausgebildetes Quetschventilgehäuse (11) aufweist, welches einen der Pulverförderkammer (2, 2') zugewandten ersten Bereich (15a) und einen gegenüberliegenden zweiten Bereich (15b) aufweist,
**dadurch gekennzeichnet,**
**dass** der erste Bereich (15a) des Quetschventilgehäuses (11) ausgebildet ist, mittels einer Steckverbindung, insbesondere mittels einer reinen Steckverbindung, mit dem Endbereich der Pulverförderkammer (2, 2') verbindbar zu sein, und wobei der zweite Bereich (15b) des Quetschventilgehäuses (11) ausgebildet ist, das Quetschventil (6, 7) austauschbar aufzunehmen, und
**dass** bei dem Endbereich der Pulverförderkammer (2, 2') sich das Filterelement (5) über den Endbereich des Mantelkörpers (4) hinaus erstreckt, und wobei der erste Bereich (15a) des Quetschventilgehäuses (11) ausgebildet ist, den sich über den Endbereich des Mantelkörpers (4) hinaus erstreckenden Bereich des Filterelements (5) aufzunehmen.

2. Pulverdichtstrompumpe (1) nach Anspruch 1,
wobei der erste Bereich (15a) des Quetschventilgehäuses (11) einen dem Mantelkörper (4) zugewandten ersten Abschnitt und einen gegenüberliegenden zweiten Abschnitt aufweist, wobei der erste Abschnitt des Quetschventilgehäuses (11) und der Endbereich des Mantelkörpers (4) ausgebildet sind, eine lösbare Steckverbindung zwischen dem Quetschventilgehäuse (11) und dem Mantelkörper (4) auszubilden, wobei der erste Abschnitt des Quetschventilgehäuses (11) vorzugsweise als Spitzende für den Anschluss an den Endbereich des Mantelkörpers (4) ausgebildet ist, oder wobei der Endbereich des Mantelkörpers (4) vorzugsweise als Spitzende für den Anschluss an den ersten Abschnitt des Quetschventilgehäuses (11) ausgebildet ist.

3. Pulverdichtstrompumpe (1) nach Anspruch 2,
wobei mindestens ein Anschlag vorgesehen ist, welcher ausgebildet ist, eine Bewegung des Quetschventilgehäuses (11) relativ zu dem Mantelkörper (4) der Pulverförderkammer (2, 2') in Steckrichtung zu begrenzen, wobei der mindestens eine Anschlag vorzugsweise durch eine am Endbereich des Mantelkörpers (4) ausgebildete erste Anschlagfläche und eine am ersten Bereich (15a) des Quetschventilgehäuses (11) ausgebildete zweite Anschlagfläche gebildet wird, wobei nach dem Ausbilden der Steckverbindung zwischen dem Quetschventilgehäuse (11) und dem Endbereich der Pulverförderkammer (2, 2') die zweite Anschlagfläche an der ersten Anschlagfläche vorzugsweise abdichtend anliegt.

4. Pulverdichtstrompumpe (1) nach Anspruch 2 oder 3,
wobei zwischen dem ersten Abschnitt des Quetschventilgehäuses (11) und dem Endbereich des Mantelkörpers (4) ein elastisches Dichtmittel (20), vorzugsweise in Gestalt eines O-Rings, vorgesehen ist.

5. Pulverdichtstrompumpe (1) nach einem der Ansprüche 2 bis 4,
wobei der zweite Abschnitt des Quetschventilgehäuses (11) ausgebildet ist, einen sich über den Endbereich des Mantelkörpers (4) hinaus erstreckenden Bereich des Filterelements (5) aufzunehmen, wobei zwischen dem zweiten Abschnitt des Quetschventilgehäuses (11) und dem sich über den Endbereich des Mantelkörpers (4) hinaus erstreckenden Bereich des Filterelements (5) ein elastisches Dichtmittel (21), vorzugsweise in Gestalt eines O-Rings, vorgesehen ist.

6. Pulverdichtstrompumpe (1) nach einem der Ansprüche 1 bis 5,
wobei ein lösbares Sicherungselement (29), insbesondere in Gestalt einer Klammer, vorgesehen ist zum lösbaren Fixieren des Quetschventilgehäuses (11) mit der eingesteckten Pulverförderkammer (2, 2') an einer Halterung (13) der Pulverdichtstrompumpe (1).

7. Pulverdichtstrompumpe (1) nach einem der Ansprüche 1 bis 6,
wobei das Quetschventil (6, 7) als patronen- oder kartuschenartige Komponente ausgeführt ist und ein zumindest bereichsweise schlauchförmiges Ventilelement (14) aufweist, dessen Umfangswand quer zur Ventilelement-Längsachse zusammenquetschbar ist, um den Durchflussquerschnitt zu verändern, und ferner eine vorzugsweise zumindest im Wesentlichen rohrförmige Stützstruktur (19) aufweist, in welcher das Ventilelement (14) zumindest bereichsweise und insbesondere austauschbar aufgenommen ist.

8. Pulverdichtstrompumpe (1) nach einem der Ansprüche 1 bis 7,
wobei das Quetschventil (6, 7) in den zweiten Bereich (15b) des Quetschventilgehäuses (11) einsteckbar ist, wobei im eingesteckten Zustand zwischen dem Quetschventil (6, 7) und einem Innenwandbereich des zweiten Bereichs (15b) des Quetschventilgehäuses (11) eine mit Druckluft beaufschlagbare, insbesondere ringförmige Druckkammer gebildet wird, und
wobei ein Anschlag vorgesehen ist zum Begrenzen einer Bewegung des Quetschventils (6, 7) relativ zu dem Quetschventilgehäuse (11) in Einsteckrichtung, wobei der Anschlag durch eine erste Anschlagfläche des Quetschventilgehäuses (11) und eine zweite Anschlagfläche des Quetschventils (6, 7) gebildet ist, wobei im eingesteckten Zustand die zweite Anschlagfläche an der ersten Anschlagfläche vorzugsweise abdichtend anliegt.

9. Pulverdichtstrompumpe (1) nach Anspruch 8,
wobei das Quetschventilgehäuse (11) mindestens einen Druckluftanschluss (17) aufweist, über den der Druckkammer bedarfsweise Druckluft zuführbar ist.

10. Pulverdichtstrompumpe (1) nach einem der Ansprüche 1 bis 9,
wobei an einem der Pulverförderkammer (2, 2') abgewandten Endabschnitt des zweiten Bereichs (15b) des Quetschventilgehäuses (11) eine Schnittstelle ausgebildet ist, über die der zweite Bereich (15b) des Quetschventilgehäuses (11) lösbar mit einer Pulverleitung (9) verbindbar ist, wobei die Schnittstelle insbesondere als Gewindebereich und vorzugsweise als Außengewindebereich ausgeführt und ausgebildet ist, eine Überwurfmutter (23) zum lösbaren Anschließen eines Schlauchanschlusses (24) an den zweiten Bereich (15b) des Quetschventilgehäuses (11) aufzunehmen.

11. Pulverdichtstrompumpe (1) nach einem der Ansprüche 1 bis 10,
wobei das Quetschventilgehäuse (11) einen zwischen seinem ersten Bereich (15a) und seinem zweiten Bereich (15b) ausgebildeten Übergangsbereich (8) aufweist, welcher ausgebildet ist, einen durch den Querschnitt des Filterelements (5) vorgegebenen effektiven Strömungsquerschnitt der Pulverförderkammer (2, 2') zumindest teilweise auf einen effektiven Strömungsquerschnitt des Quetschventils (6, 7) in seinem geöffneten Zustand zu reduzieren, wobei der Übergangsbereich (8) insbesondere zumindest bereichsweise trichter- oder konusförmig ausgeführt ist.

12. Pulverdichtstrompumpe (1) nach Anspruch 11,
wobei der Übergangsbereich (8) des Quetschventilgehäuses (11) ausgebildet ist, zumindest bereichsweise ein insbesondere zumindest bereichsweise konusförmiges und gasdurchlässiges Filterendstück (10) der Pulverförderkammer (2, 2') aufzunehmen, wobei das Filterendstück (10) insbesondere separat von dem Filterelement (5) der Pulverförderkammer (2, 2') ausgeführt ist.

13. Pulverdichtstrompumpe (1) nach Anspruch 12,
wobei das Filterendstück (10) über den zweiten Bereich (15b) des Quetschventilgehäuses (11) in den Übergangsbereich (8) des Quetschventilgehäuses (11) steckbar ist.

14. Pulverdichtstrompumpe (1) nach Anspruch 12 oder 13,
wobei Dichtmittel (25), insbesondere in Gestalt von O-Ringen, derart vorgesehen sind, dass in einem in den Übergangsbereich (8) des Quetschventilgehäuses (11) aufgenommenen und insbesondere eingesteckten Zustand des Filterendstücks dieses gegenüber dem zweiten Bereich (15b) des Quetschventilgehäuses (11) und gegenüber einem zwischen dem Mantelkörper (4) und dem Filterelement (5) gebildeten, insbesondere ringförmigen Spaltraum abgedichtet ist.

15. Pulverdichtstrompumpe (1) nach einem der Ansprüche 12 bis 14,
wobei in einem in den Übergangsbereich (8) des Quetschventilgehäuses (11) aufgenommenen und insbesondere eingesteckten Zustand des Filterendstücks (10) zwischen einem Innenwandbereich des Übergangsbereichs (8) des Quetschventilgehäuses (11) und dem Filterendstück (10) ein insbesondere ringförmiger Spaltraum gebildet ist, der bedarfsweise über einen Druckluftanschluss (18) des Quetschventilgehäuses (11) mit Druckluft beaufschlagbar ist, insbesondere um den Endbereich der Pulverförderkammer (2, 2') von Pulverablagerungen freizuhalten oder um Pulverablagerungen am Endbereich zu entfernen.

## Claims

1. A dense phase powder pump (1) for conveying powdery materials, particularly coating powder, wherein the dense phase powder pump (1) comprises at least one powder conveying chamber (2, 2') having a gas-permeable filter element (5) at least partially accommodated in a casing body (4) and at least one pinch valve (6, 7) connected or connectable to an end region of the powder conveying chamber (2, 2'), wherein the dense phase powder pump (1) comprises a pinch valve housing (11) designed in particular as an end piece of the powder conveying chamber (2, 2') which has a first region (15a) facing the powder conveying chamber (2, 2') and an oppositely disposed second region (15b),
**characterized in that**
the first region (15a) of the pinch valve housing (11) is designed to be connectable to the end region of the powder conveying chamber (2, 2') via a plug connection, particularly via a pure plug connection, and wherein the second region (15b) of the pinch valve housing (11) is designed to replaceably accommodate the pinch valve (6, 7), and
that at the end region of the powder chamber (2, 2') the filter element (5) extends beyond the end region of the casing body (4), and wherein the first region (15a) of the pinch valve housing (11) is designed to accommodate the region of the filter element (5) extending beyond the end region of the casing body (4).

2. The dense phase powder pump (1) according to claim 1,
wherein the first region (15a) of the pinch valve housing (11) comprises a first section facing the casing body (4) and an oppositely disposed second section, wherein the first section of the pinch valve housing (11) and the end region of the casing body (4) are designed to form a disengageable plug connection between the pinch valve housing (11) and the casing body (4), wherein the first section of the pinch valve housing (11) preferably is designed as a spigot for the connection at the end region of the casing body (4), or wherein the end region of the casing body (4) is preferably designed as a spigot for the connection at the first section of the pinch valve housing (11).

3. The dense phase powder pump (1) according to claim 2,
wherein at least one stop is provided which is designed to limit movement of the pinch valve housing (11) relative to the casing body (4) of the powder conveying chamber (2, 2') in the mating direction, wherein the at least one stop is preferably formed by a first abutment surface formed at the end region of the casing body (4) and a second abutment surface formed at the first region (15a) of the pinch valve housing (11), wherein after the plug connection being made between the pinch valve housing (11) and the end region of the powder conveying chamber (2, 2'), the second abutment surface preferably tightly seals against the first abutment surface.

4. The dense phase powder pump (1) according to claim 2 or 3,
wherein an elastic sealing means (20), preferably in the form of an O-ring, is provided between the first section of the pinch valve housing (11) and the end region of the casing body (4).

5. The dense phase powder pump (1) according to anyone of claims 2 to 4, wherein the second section of the pinch valve housing (11) is designed to accommodate a region of the filter element (5) extending beyond the end region of the casing body (4), wherein an elastic sealing means (21), preferably in the form of an O-ring, is provided between the second section of the pinch valve housing (11) and the region of the filter element (5) extending beyond the end region of the casing body (4).

6. The dense phase powder pump (1) according to one of claims 1 to 5,
wherein a releasable securing element (29), particularly in form of a retaining clip, is provided for releasably fixing the pinch valve housing (11) with the inserted powder conveying chamber (2, 2') to a mounting (13) of the dense phase powder pump (1).

7. The dense phase powder pump (1) according to one of claims 1 to 6,
wherein the pinch valve (6, 7) is implemented as a cartridge-like or canister-like component and comprises an at least partly tubular valve element (14), its peripheral wall able to be squeezed transversely to the valve element longitudinal axis in order to change the sectional area of flow, and further comprises an in particular at least substantially tubular support structure (19) in which the valve element (14) is at least in part and in particular replaceably accommodated.

8. The dense phase powder pump (1) according to anyone of claims 1 to 7, wherein the pinch valve (6, 7) can be inserted into the second region (15b) of the pinch valve housing (11), wherein an in particular annular pressure chamber able to be pressurized with compressed air is formed between the pinch valve (6, 7) and an inner wall area of the second region (15b) of the pinch valve housing (11) in the inserted state, and
wherein a stop is provided in order to limit movement of the pinch valve (6, 7) relative to the pinch valve housing (11) in the inserting direction, wherein the stop is formed by a first abutment surface of the pinch valve housing (11) and a second abutment surface of the pinch valve (6, 7), wherein the second abutment surface preferably tightly seals against the first abutment surface in the inserted state.

9. The dense phase powder pump (1) according to claim 8,
wherein the pinch valve housing (11) has at least one compressed air connection (17) through which compressed air can be supplied to the pressure chamber as necessary.

10. The dense phase powder pump (1) according to anyone of claims 1 to 9, wherein an interface is formed on an end section of the second region (15b) of the pinch valve housing (11) opposite from the powder conveying chamber (2, 2') by means of which the second region (15b) of the pinch valve housing (11) can be detachably connected to a powder line (9), wherein the interface is in particular designed and implemented as a threaded section, and preferably an external threaded section, so as to receive a union nut (23) for detachably connecting a hose connector (24) to the second region (15b) of the pinch valve housing (11).

11. The dense phase powder pump (1) according to one of claims 1 to 10,
wherein the pinch valve housing (11) comprises a transition region (8) formed between its first region (15a) and its second region (15b) which is designed to at least partly reduce an effective sectional area of flow of the powder conveying chamber (2, 2') as dictated by the cross section of the filter element (5) to an effective sectional area of flow of the pinch valve (6, 7) in its opened state, wherein the transition region (8) is in particular at least in part implemented as a funnel-shaped or conical region.

12. The dense phase powder pump (1) according to claim 11,
wherein the transition region (8) of the pinch valve housing (11) is designed to at least partially accommodate an in particular at least partly conical and gas-permeable filter end piece (10) of the powder conveying chamber (2, 2'), wherein the filter end piece (10) is in particular realized as a separate component from the filter element (5) of the powder conveying chamber (2, 2').

13. The dense phase powder pump (1) according to claim 12,
wherein the filter end piece (10) can plug into the transition region (8) of the pinch valve housing (11) by way of the second region (15b) of the pinch valve housing (11).

14. The dense phase powder pump (1) according to claim 12 or 13,
wherein sealing means (25), particularly in the form of O-rings, are provided such that when the filter end piece is accommodated and in particular in an inserted state in the transition region (8) of the pinch valve housing (11), it is sealed relative to the second region (15b) of the pinch valve housing (11) and relative to an in particular annular gap area formed between the casing body (4) and the filter element (5).

15. The dense phase powder pump (1) according to anyone of claims 12 to 14, wherein an in particular annular gap area is formed between an inner wall area of the transition region (8) of the pinch valve housing (11) and the filter end piece (10) when the filter end piece (10) is accommodated and in particular in an inserted state in the transition region (8) of the pinch valve housing (11) which can be pressurized with compressed air when necessary via a compressed air connection (18) of the pinch valve housing (11), particularly so as to keep the end region of the powder conveying chamber (2, 2') free of powder deposits or to remove deposits of powder at the end region.

## Revendications

1. Pompe de flux de poudre en phase dense (1) destinée à refouler des matériaux pulvérulents, en particulier une poudre pour revêtement, dans laquelle la pompe de flux de poudre en phase dense (1) présente au moins une chambre de refoulement de poudre (2, 2') avec un élément de filtre (5) perméable aux gaz, reçu au moins en partie dans un corps enveloppant (4), et au moins une vanne à écrasement (6, 7) raccordée ou pouvant être raccordée à une zone d'extrémité de la chambre de refoulement de poudre (2, 2'), dans laquelle la pompe de flux de poudre en phase dense (1) présente un boîtier de vanne à écrasement (11) réalisé en particulier comme pièce d'extrémité de la chambre de refoulement de poudre (2, 2'), qui présente une première zone (15a) tournée vers la chambre de refoulement de poudre (2, 2') et une seconde zone (15b) opposée,
**caractérisé en ce que**
la première zone (15a) du boîtier de vanne à écrasement (11) est réalisée, à l'aide d'un raccord enfichable, en particulier à l'aide d'un raccord enfichable unique, de façon à pouvoir être raccordée à la zone d'extrémité de la chambre de refoulement de poudre (2, 2'), et dans laquelle la seconde zone (15b) du boîtier de vanne à écrasement (11) est réalisée de façon à recevoir la vanne à écrasement (6, 7) de manière interchangeable, et
**en ce que**, au niveau de la zone d'extrémité de la chambre de refoulement de poudre (2, 2'), l'élément de filtre (5) s'étend au-delà de la zone d'extrémité du corps enveloppant (4), et dans laquelle la première zone (15a) du boîtier de vanne à écrasement (11) est réalisée de façon à recevoir la zone de l'élément de filtre (5) qui s'étend au-delà de la zone d'extrémité du corps enveloppant (4).

2. Pompe de flux de poudre en phase dense (1) selon la revendication 1, dans laquelle la première zone (15a) du boîtier de vanne à écrasement (11) présente une première section tournée vers le corps enveloppant (4) et une seconde section opposée, dans laquelle la première section du boîtier de vanne à écrasement (11) et la zone d'extrémité du corps enveloppant (4) sont réalisées de façon à réaliser un raccord enfichable détachable entre le boîtier de vanne à écrasement (11) et le corps enveloppant (4), dans laquelle la première section du boîtier de vanne à écrasement (11) est réalisée de préférence en tant qu'extrémité pointue pour le raccord à la zone d'extrémité du corps enveloppant (4), ou dans laquelle la zone d'extrémité du corps enveloppant (4) est réalisée de préférence sous forme d'extrémité pointue pour le raccord à la première section du boîtier de vanne à écrasement (11).

3. Pompe de flux de poudre en phase dense (1) selon la revendication 2, dans laquelle il est prévu au moins une butée qui est réalisée de façon à limiter un déplacement du boîtier de vanne à écrasement (11) relativement au corps enveloppant (4) de la chambre de refoulement de poudre (2, 2') dans la direction d'enfichage, dans laquelle ladite au moins une butée est formée de préférence par une première surface de butée au niveau de la zone d'extrémité du corps enveloppant (4) et par une seconde surface de butée au niveau de la première zone (15a) du boîtier de vanne à écrasement (11), dans laquelle la seconde surface de butée, après réalisation du raccord enfichable entre le boîtier de vanne à écrasement (11) et la zone d'extrémité de la chambre de refoulement de poudre (2, 2'), est de préférence en contact d'étanchéité avec la première surface de butée.

4. Pompe de flux de poudre en phase dense (1) selon la revendication 2 ou 3, dans laquelle il est prévu, entre la première section du boîtier de vanne à écrasement (11) et la zone d'extrémité du corps enveloppant (4), un moyen d'étanchéité élastique (20), de préférence sous forme de joint torique.

5. Pompe de flux de poudre en phase dense (1) selon l'une quelconque des revendications 2 à 4,
dans laquelle la seconde section du boîtier de vanne à écrasement (11) est réalisée de façon à recevoir une zone de l'élément de filtre (5) s'étendant au-delà de la zone d'extrémité du corps enveloppant (4), dans laquelle il est prévu, entre la seconde section du boîtier de vanne à écrasement (11) et la zone de l'élément de filtre (5) s'étendant au-delà de la zone d'extrémité du corps enveloppant (4), un moyen d'étanchéité élastique (21), de préférence sous forme de joint torique.

6. Pompe de flux de poudre en phase dense (1) selon l'une quelconque des revendications 1 à 5,
dans laquelle il est prévu un élément de sécurité détachable (29), en particulier sous forme d'une pince, destiné à fixer de manière détachable le boîtier de vanne à écrasement (11) avec la chambre de refoulement de poudre (2, 2') enfichée au niveau d'un support (13) de la pompe de flux de poudre en phase dense (1).

7. Pompe de flux de poudre en phase dense (1) selon l'une quelconque des revendications 1 à 6,
dans laquelle la vanne à écrasement (6, 7) est conçue comme composante du type à cartouches et présente un élément de vanne (14) au moins en partie en forme de flexible, dont la paroi circonférentielle peut être écrasée de manière transversale à l'axe longitudinal de l'élément de vanne pour modifier la section de débit, et présente en outre une structure de manchon (19), de préférence au moins sensiblement tubulaire, dans laquelle l'élément de vanne (14) est reçu au moins en partie et en particulier de manière interchangeable.

8. Pompe de flux de poudre en phase dense (1) selon l'une quelconque des revendications 1 à 7,
dans laquelle la vanne à écrasement (6, 7) peut être enfichée dans la seconde zone (15b) du boîtier de vanne à écrasement (11), dans laquelle, dans l'état enfiché, une chambre de compression, en particulier de forme annulaire, alimentée par de l'air comprimé, est réalisée entre la vanne à écrasement (6, 7) et une zone de paroi intérieure de la seconde zone (15b) du boîtier de vanne à écrasement (11), et dans laquelle il est prévu une butée pour limiter un déplacement de la vanne à écrasement (6, 7) relativement au boîtier de vanne à écrasement (11) dans la direction d'enfichage, dans laquelle la butée est réalisée par une première surface de butée de boîtier de vanne à écrasement (11) et une seconde surface de butée de la vanne à écrasement (6, 7), dans laquelle, dans l'état enfiché, la seconde surface de butée est de préférence en contact d'étanchéité avec la première surface de butée.

9. Pompe de flux de poudre en phase dense (1) selon la revendication 8, dans laquelle le boîtier de vanne à écrasement (11) présente au moins un raccord à air comprimé (17) par l'intermédiaire duquel de l'air comprimé peut être amené à la chambre de compression en fonction des besoins.

10. Pompe de flux de poudre en phase dense (1) selon l'une quelconque des revendications 1 à 9,
dans laquelle il est réalisé, au niveau d'une section d'extrémité, détournée de la chambre de refoulement de poudre (2, 2'), de la seconde zone (15b) du boîtier de vanne à écrasement (11), une interface par l'intermédiaire de laquelle la seconde zone (15b) du boîtier de vanne à écrasement (11) peut être raccordée de manière détachable à une conduite de poudre (9), dans laquelle l'interface est conçue et réalisée en particulier comme zone de filetage et de préférence comme zone de filetage extérieur, de façon à recevoir un écrou d'accouplement (23) pour raccorder de manière détachable un raccord de flexible (24) au niveau de la seconde zone (15b) du boîtier de vanne à écrasement (11).

11. Pompe de flux de poudre en phase dense (1) selon l'une quelconque des revendications 1 à 10,
dans laquelle le boîtier de vanne à écrasement (11) présente une zone de transition (8), réalisée entre sa première zone (15a) et sa seconde zone (15b), qui est réalisée de façon à réduire une section d'écoulement réelle, prédéfinie par la section de l'élément de filtre (5), de la chambre de refoulement de poudre (2, 2'), au moins en partie à une section d'écoulement réelle de la vanne à écrasement (6, 7) dans son état ouvert, la zone de transition (8) étant conçue en particulier, au moins en partie, dans une forme d'entonnoir ou de cône.

12. Pompe de flux de poudre en phase dense (1) selon la revendication 11, dans laquelle la zone de transition (8) du boîtier de vanne à écrasement (11) est réalisée de façon à recevoir, au moins en partie, une pièce d'extrémité de filtre (10), en particulier au moins en partie de forme conique et perméable aux gaz, de la chambre de refoulement de poudre (2, 2'), la pièce d'extrémité de filtre (10) étant conçue en particulier séparément de l'élément de filtre (5) de la chambre de refoulement de poudre (2, 2').

13. Pompe de flux de poudre en phase dense (1) selon la revendication 12, dans laquelle la pièce d'extrémité de filtre (10) peut être enfichée par l'intermédiaire de la seconde zone (15b) du boîtier de vanne à écrasement (11) dans la zone de transition (8) du boîtier de vanne à écrasement (11).

14. Pompe de flux de poudre en phase dense (1) selon la revendication 12 ou 13,
dans laquelle des moyens d'étanchéité (25), en particulier sous forme de joints toriques, sont prévus de telle sorte que, dans un état de réception et en particulier d'enfichage dans la zone de transition (8) du boîtier de vanne à écrasement (11) de la pièce d'extrémité de filtre (10), celle-ci est étanchée par rapport à la seconde zone (15b) du boîtier de vanne à écrasement (11) et par rapport à un interstice en particulier annulaire réalisé entre le corps enveloppant (4) et un élément de filtre (5).

15. Pompe de flux de poudre en phase dense (1) selon l'une quelconque des revendications 12 à 14,
dans laquelle, dans un état de réception et en particulier d'enfichage dans la zone de transition (8) du boîtier de vanne à écrasement (11) de la pièce d'extrémité de filtre (10), il est réalisé, entre une zone de paroi intérieure de la zone de transition (8) du boîtier de vanne à écrasement (11) et la pièce d'extrémité de filtre (10), un interstice, en particulier de forme annulaire, qui peut être alimenté en air comprimé, selon les besoins, par l'intermédiaire d'un raccord à air comprimé (18) du boîtier de vanne à écrasement (11), en particulier pour libérer la zone d'extrémité de la chambre de refoulement de poudre (2, 2') de tous dépôts de poudre ou pour éliminer les dépôts de poudre au niveau de la zone d'extrémité.
